# EUROPÄISCHE PATENTANMELDUNG

(11) **EP 1 471 755 A1**
(43) Veröffentlichungstag der Anmeldung: **27.10.2004**
(21) Anmeldenummer: 03101148.9
(22) Anmeldetag: 24.04.2003
(51) Int. Cl.: H04Q 7/38

(54) **Verfahren zur menügesteuerten Auswahl von Optionen in einem Mobilendgerät während einer Sprachverbindung**

(71) Anmelder: Swisscom Mobile AG, 3050 Bern (CH); Studer, Reto, 3032 Bern (CH); Lauper, Eric, 3014 Bern (CH)
(72) Erfinder: Studer, Reto c/o Swisscom Mobile AG, 3050 Bern (CH); Lauper, Eric c/o Swisscom Mobile AG, 3050 Bern (CH)
(74) Vertreter: Saam, Christophe

(57) **Zusammenfassung**

Verfahren, mit welchem ein Dienstserver (5) ein Menu visuell auf der Anzeige (100) einesMobilendgeräts(10) wiedergeben lassen kann, wobei dasMenu eine Vielzahl von Menuoptionen beinhaltet, wobei mindestens gewisse Menuoptionen vom Dienstserver (5) dem benannten Mobilteilnehmer während einer Sprachverbindung gesprochen werden, wobei dasbenannte Menu während der benannten Sprachverbindung wiedergegeben wird,

Das Menu über ein Datagramm, dasvom benannten Dienstserver vorbereitet wird, wird an den benannten Mobilteilnehmer gesendet. Das Datagramm wird über einen separaten, nicht geschalteten Datenübertragungskanal übertragen, beispielsweise über USSD oder SMS.

## Beschreibung

Die vorliegende Erfindung betrifft ein Verfahren, mit welchem Mobilteilnehmer Optionen in einem Sprachmenu wählen können.

Dienstserver mit einem IVR-Modul (Interactiv Voice Response) sind heute weit verbreitet und werden von Mobilteilnehmern angerufen, um bestimmte Informationen zu erhalten oder Dienste zu benutzen. Viele Dienstserver verwenden sogenannte Sprachmenus, die oft aus einer Liste vom Server gesprochenen Optionen bestehen. Der Mobilteilnehmer muss typischerweise eine Option im Menu mit einem DTMF-Befehl, das heisst mit bestimmten Tasten seines Telefons, oder mit einem gesprochenen Befehl wählen, um auf die gewünschte Information zugreifen zu können.

Diese gewöhnliche Lösung hat mehrere Nachteile.

Zum einen können sich Teilnehmer nur an eine begrenzte Anzahl von gesprochenen Menuoptionen erinnern. Die Anzahl der angebotenen Optionen mussdaher klein gehalten werden, was die Einsatzmöglichkeiten einschränkt. Benutzer müssen sich nicht nur an jede Option erinnern, sondern auch an die Taste oder an die Sprachbefehle, die eingegeben werden müssen, damit die gewünschte Option gewählt wird. Wurde eine Menuoption nicht gehört, nicht verstanden oder vergessen, mussmeistens die gesamte Liste von Optionen vom Dienstserver wiederholt werden. Die Interaktivität zwischen dem Teilnehmer und dem Dienstserver ist daher eingeschränkt.

Es ist daher ein Ziel der Erfindung, ein Verfahren und eine Vorrichtung anzubieten, die eine bessere Interaktivität als gewöhnliche Dienstserver erlauben.

Es sind ausserdem Systeme bekannt, die ein multimodales Gespräch zwischen Telekommunikationsnetz-Teilnehmern erlauben. Mit diesen Systemen wird parallel zur Sprachverbindung eine Datenverbindung aufgebaut; die beiden Gesprächsteilnehmer können somit während einem Gespräch Daten austauschen, wobei die erhaltenen Daten visuell auf einer Anzeige der Teilnehmer-Endgeräte wiedergegeben werden können. Mit solchen Systemen wäre es möglich, das Menu, das von einem Dienstserver gesprochen wird, während der Sprachverbindung als Data zu übertragen und auf der Anzeige desTeilnehmer-Mobilendgeräts wiederzugeben.

Ene Voraussetzung für eine solche Lösung ist jedoch, dass Daten parallel zu einem Telefongespräch übertragen werden können. Dies ist oft der Fall bei Packet-orientierten Telekommunikationsnetzen, insbesondere in IP-Netzen, nicht jedoch bei herkömmlichen geschalteten telefonischen Fixnetzen und Mobilnetzen. In ISDN-Netzen ist zwar zusätzlich zu zwei Telefonkanälen auch ein Signalisierungskanal vorhanden, der sich für die Übertragung von Daten eignet, jedoch verfügt nur eine Minderheit der Teilnehmer über ein ISDN-Endgerät. Ausserdem ist dieser Signalisierungskanal auch geschaltet, so dass eine Datenverbindung zwischen den beiden Gesprächsteilnehmern aufgebaut werden muss, bevor Daten übertragen werden können. Der Aufbau einer geschalteten Verbindung für die Übertragung von kleineren Daten, zum Beispiel Textmenus oder gewählte Optionen, erfordert jedoch einen Aufwand und Kosten, die sich für den Zweck kaum rechtfertigen. Ausserdem muss eine gerätabhängige Softwareanwendung im Endgerät installiert werden, um diese Datenverbindung aufzubauen sowie um Daten zu empfangen und als Menu darzustellen.

Das für GSM-Mobilfunknetze entwickelte WAP-Verfahren (Wireless Application Plattform) erlaubt es auch, Daten während einem Telefongespräch auszutauschen. Das WAP-Protokoll verlangt jedoch GSM-Mobilendgeräte, die über einen WML-Browser (Wireless Markup Language) verfügen. Solche Geräte sind noch nicht sehr verbreitet; ausserdem haben viele Teilnehmer, die zwar ein WAP-Mobilendgerät haben, dieses nicht für WAP-Sessionen konfiguriert. Ferner lassen die meisten Endgeräte nicht gleichzeitig eine WAP- und eine Sprachverbindung zu. Das WAP-Protokoll eignet sich daher kaum für multimodale Interaktionen zwischen einem Dienstserver und einer möglichst grossen Anzahl von Teilnehmern.

Es ist daher ein anderes Ziel der Erfindung, ein Verfahren und eine Vorrichtung anzubieten, mit welchem Menuoptionen multimodal, das heisst sowohl visuell als auch gleichzeitig gesprochen, mit herkömmlichen, ungeänderten und weit verbreiteten Endgeräten, insbesondere standard Mobilendgeräte, wiedergegeben und ausgewählt werden können.

Es ist auch ein Ziel der Erfindung, ein Verfahren und eine Vorrichtung anzubieten, mit welchem Menuoptionen multimodal, das heisst sowohl visuell als auch gleichzeitig gesprochen, auch mit Endgeräten, die im Netz eines anderen Netzbetreibers angemeldet sind, wiedergegeben und ausgewählt werden können.

Es ist auch ein Ziel der Erfindung, ein Verfahren und eine Vorrichtung anzubieten, mit welchem Menuoptionen multimodal, das heisst sowohl visuell als auch gleichzeitig gesprochen, auch mit bereits heute herkömmlichen GSM-Mobilgeräten wiedergegeben und ausgewählt werden können.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren erreicht, mit welchem ein Dienstserver ein Menu visuell auf der Anzeige eines Mobilendgeräts anzeigen lassen kann, wobei das Menu eine Vielzahl von Menuoptionen beinhaltet, wobei mindestensgewisse Menuoptionen vom Dienstserver dem benannten Teilnehmer während einer Sprachverbindung gesprochen werden, wobei das benannte Menu während der benannten Sprachverbindung visuell wiedergegeben wird, und in welchem das benannte Menu über ein Datagramm, das vom Dienstserver vorbereitet wird, an den Teilnehmer gesendet wird, wobei das benannte Datagramm über einen separaten, nicht geschalteten Datenübertragungskanal übertragen wird.

Dies hat den Vorteil, dass das vom Dienstserver angebotene Menu gleichzeitig mündlich über den Sprachkanal und visuell über ein Datagramm übertragen und wiedergegeben werden kann. Auch die vom Teilnehmer ausgewählte Menuoption kann über ein Datagramm, statt oder zusätzlich zu einem DTMF- oder Sprachbefehl, an den Dienstserver gesendet werden.

Dies hat auch den Vorteil, dass bereits existierende Datenübertragungskanäle für die Übertragung der Menuoptionen und der vom Teilnehmer gewählten Menuoptionen verwendet werden können. Insbesondere GSM-Mobilendgeräte können verschiedene Datagramms senden und empfangen, die über verbindungsfreie (nicht geschaltete) Datenübertragungskanäle übertragen werden und die mit fast allen GSM-Mobilendgeräten verwendet werden können. Insbesondere können für diesen Zweck SMS und USSD verwendet werden, wobei USSD den Vorteil einer quasi-synchronen Übertragung haben.

Dies hat den Vorteil, dass so wohl das Sprachmenu und der gesprochene Text als auch das angezeigte Menu vom selben Dienstserver vorbereitet werden. Beide Menuskönnen somit synchronisiert werden. Ausserdem kann der gesprochene Text von früheren gesendeten oder empfangenen Datagramms abhängig sein; umgekehrt können die Textmenüs vom frühreren Gespräch beeinflusst werden.

In einer bevorzugten Variante können mindestens gewisse Menuoptionen entweder über Sprachbefehfe, über DTMF-Befehle oder über die benannten Datagramms gewählt werden.

In einer bevorzugten Variante sendet der Dienstserver die Menuoptionen in einem Datagramm an das Mobilendgerät des benannten Mobilteilnehmers, dasdiese Menuoptionen anzeigt. Es sind bereits Formats für SMS-Menus und USSD-Menus bekannt. Wenn SMS beziehungsweise USSD mit diesem Format von einem Mobilendgerät empfangen werden, werden sie in einem entsprechenden Menu-Format sofort angezeigt. Es können auch normale Text-SMS oder USSD derart formatiert werden,. Dass sie wie ein Menu angezeigt werden.

Die vorliegende Erfindung wird mit Hilfe der als Beispiel gegebenen Beschreibung besser verständlich und durch die beiliegenden Figuren veranschaulicht:
Die Figur 1 zeigt ein Blockschema, dasdie Hauptkomponenten eines Systems gemäss der Erfindung veranschaulicht.
Die Figur 2 zeigt den Informationsfluss in einer ersten Variante der Erfindung, in welcher der Teilnehmer vorerst den Dienstserver anruft, um eine Sprachverbindung aufzubauen.
Die Figur 3 zeigt den Informationsfluss in einer zweiten Variante der Erfindung, in welcher der Teilnehmer vorerst eine USSD sendet, um den Vorgang zu starten.

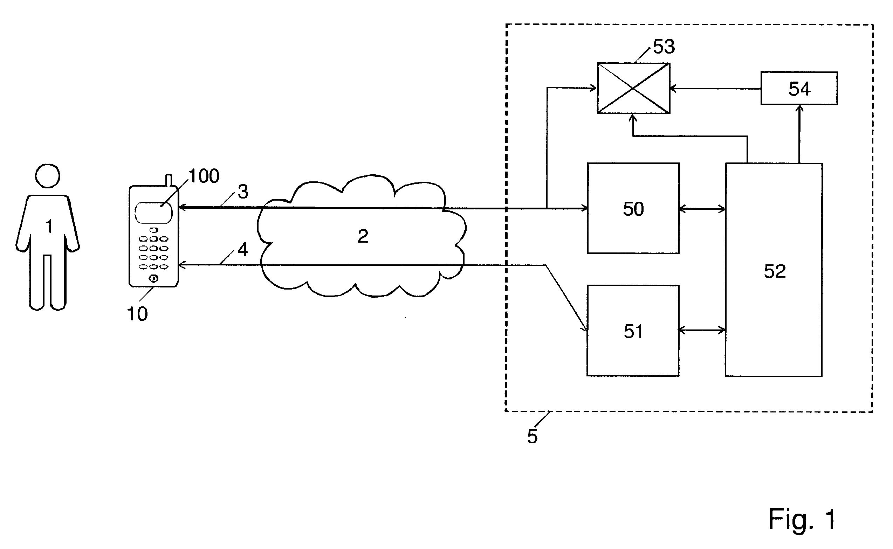

Figur 1 zeigt ein Blockschema mit den Hauptakteuren oder Komponenten des Systems. Im dargestellten Beispiel umfasst das System eine Vielzahl von Teilnehmern 1, wobei nur ein Teilnehmer auf der Figur 1 gezeigt wird. Der Teilnehmer verfügt über ein Mobilendgerät 10, vorzugsweise ein GSM- oder GSM-kompatibles Mobilfunkgerät, das eine Anzeige 100 aufweist. Das System umfasst ausserdem einen Dienstserver 5, der sich entweder in der Infrastruktur desTelekommunikationsnetzes2 oder bei einem Dienstanbieter (VASP, Value-Added Service Provider) befinden kann. Über das Telekommunikationsnetz 2 können zwischen dem Teilnehmer 1 und dem Dienstserver 5 gleichzeitig geschaltete Sprachverbindungen 3 aufgebaut als auch verbindungsfreie, nicht geschaltete Datenübertragungen ausgelöst werden. Im Falle eines GSM-Netzes 2 können somit SMS- und/oder USSD-Meldungen während einem Sprachgespräch zwischen dem Mobilendgerät 10 und dem Dienstserver 5 ausgetauscht werden.

Der Dienstserver 5 umfasst ein Sprachmodul 50, zum Beispiel ein IVR-Modul, mit welchem ein Sprachmenu gesprochen werden kann, und das auch DTMF- und/oder Sprach-Befehle vom Teilnehmer 1 interpretieren kann. Das IVR-Modul 50 umfasst vorzugsweise einen Sprachsynthesizer, um Sprachbefehle zu sprechen, und ein DTMF-Befehle- und/oder Sprachbefehle-Analyser, um DTMFBefehle und vorzugsweise auch Sprachbefehle zu interpretieren. DTMF-Befehle sind Audiosignale, die durch Auswahl einer oder mehreren Tasten desTeilnehmer-Mobilendgeräts erzeugt und durch den Sprachkanal übertragen werden. Sprachbefehle-Analyser können beispielsweise mit bekannten neuronalen Netzen und/oder mit HMMs(Hidden Markov Models) gestaltet werden. Sprachmenus und Sprachbefehle werden über den Sprachkanal 3 durch das Netz 2 übertragen.

Der Dienstserver 5 umfasst ausserdem ein interaktives Datagramm-Bearbeitungsmodul 51, um Datagramme an den Teilnehmer 1 zu senden sowie um erhaltene Datagramme zu empfangen und zu interpretieren. Datagramme werden über den separaten nicht geschalteten Datenübertragungskanal 4 übertragen. Im Falle von SMSwerden sie über ein nicht dargestelltes SMS-Center (SMSC) in der Infrastruktur des Netzes 2 übertragen; im Falle von USSD werden sie über einen nicht dargestellten USSD-Händler in der Infrastruktur des Netzes 2 übermittelt.

Das IVR-Modul 50 und das Datagramm-Bearbeitungsmodul 51 werden beide von einem Gesprächmanager 52 verwaltet. Der Gesprächmanager 52 erzeugt die Menus, die vom IVR50 gesprochen und vom Modul 51 angezeigt werden, in Abhängigkeit von früheren Befehlen des Teilnehmers 1, von einer vordefinierten Menustruktur und/oder von externen Ereignissen. Ausserdem löst der Gesprächmanager 52 Aktionen aus, wenn ein entsprechender Befehl erhalten wurde. Je nach angebotenen Dienst können die möglichen Aktionen unter anderem folgende Beispiele umfassen:
- Lesen einer gewünschten Information, die beispielsweise in einer nicht dargestellten internen oder externen Datenbank abgelegt werden kann. Die gelesene Information kann über den Sprachkanal 3 und/oder über Datagramms 4 gesendet werden, möglicherweise auch über einen anderen externen Kanal wie e-mail, Post, Fax, usw.
- Anbieten einesgewünschten Diensts. Dienste, die vom Betreiber des Netzes 2 und/oder von einem externen Dienstanbieter angeboten werden, können beispielsweise die Lieferung von Produkten, das Erledigen von Zahlungstransaktionen, die Fernsteuerung und Fernprogrammierung von Geräten und Systemen, usw. umfassen.
- Aufbau und/oder Vermittlung einer Sprach- und/oder Datenverbindung mit einer Drittpartei. Zu diesem Zweck kann der Dienstserver ein Modul 54 zum Aufbau von Verbindungen (zum Beispiel ein Modem) enthalten, der mit einer internen oder externen Vermittlungsstelle 53 verbunden ist.
- Usw.

Wir werden jetzt verschiedene Beispiele von Abläufen für multimodale Interaktionen mit einem Dienstserver gemäss der Erfindung näher beschreiben.

Im ersten Beispiel dient der Dienstserver 5 als Schnittstelle zu einem Netzwerk-basierten Postdienstsystem, in welchem Anrufer Sprach-, Fax und gegebenenfalls andere Multimediale oder Datenmeldungen für den Teilnehmer 1 hinterlassen können, insbesondere wenn dieser gewünschte Teilnehmer 1 momentan unerreichbar ist. Mit dem Dienstserver 5 kann der Teilnehmer 1 sein Postfach steuern und beispielsweise hinterlassene Sprach- und Datenmeldungen zum gewünschten Zeitpunkt hören, fernladen, löschen, usw.

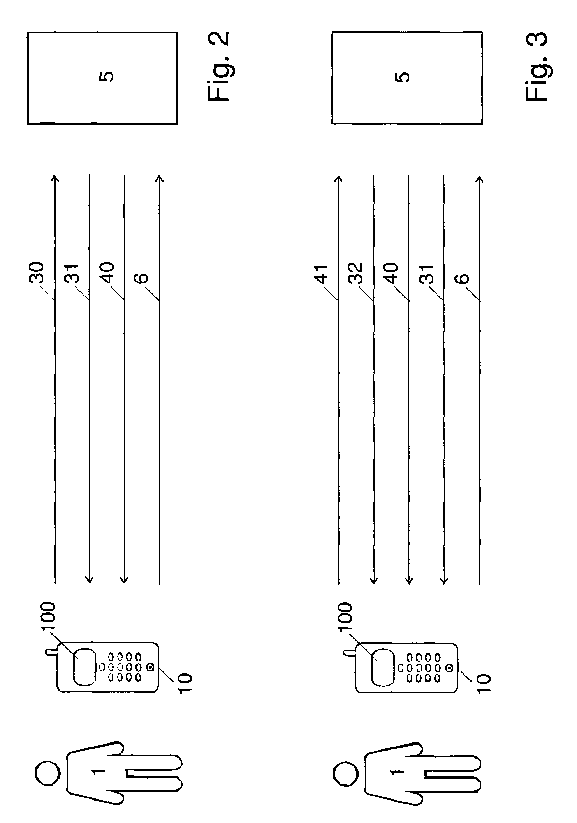

Der Teilnehmer 1, der auf seinen Postdienst zugreifen will, ruft die Dienstnummer desDienstservers 5 und baut eine Verbindung mit ihm auf. Dieser Schritt ist mit dem Pfeil 30 auf der Figur 2 schematisch dargestellt. Er wird mit seiner IMSI (International Mobile Subscriber Identification) und/oder mit seinem CLI (Caller Line Identification) im Dienstserver identifiziert. Das Datagramm-Bearbeitungsmodul 51 im Dienstserver 5 sendet dann ein Datagramm 4 (Pfeil 31), zum Beispiel eine USSD, eine USSD-Push oder eine Flash-SMS, mit einem Menu, das sofort und ohne Intervention des Teilnehmers auf seiner Anzeige 100 wiedergegeben wird.

In einer anderen Variante erreicht der Teilnehmer den Dienstserver 5 mit einem Datagramm, zum Beispiel mit einer USSD 41 auf der Figur 3. Die USSD kann beispielsweise folgendes Format aufweisen:
*138*0860794444333#
in welchem 138 die Nummer des betroffenen USSD-Dienstes, 086 eine interne Nummer, und 0794444333 die Mobiltelefonnummer des Teilnehmers 1 ist.

In dieser Variante erhält vorzugsweise der Teilnehmer vorerst das USSD-Menu auf seiner Anzeige 100, und unmittelbar danach ein Callback-Anruf 32 vom Dienstserver 5, der ihn das Menu, oder gewisse Menuoptionen, spricht. Es gibt nämlich mehr Mobilendgeräte 10, die den Aufbau einer Sprachverbindung nach dem Anzeigen eines USSD-Menus 40 unterstützen als Mobilendgeräte, die neue USSD Sessionen während einem Sprachgespräch wiedergeben können.

Im Schritt 31 spricht dann der Dienstserver 5 das Sprachmenu über die Verbindung 3, zum Beispiel:

"Guten Tag, Hier ist das Postdienstsystem für 0794444333. Sie haben folgende Möglichkeiten: Um das Begrüssungsmenu nochmals zu hören, drücken Sie Taste 1; Um Dienste zu aktivieren oder auszuschalten, drücken Sie die Taste 2; Um den Zugang einzustellen, Taste 3; Um die Sprache zu ändern, Taste 4"

Das Menu auf der Anzeige, dasdurch die vom Dienstserver 5 gesendete Antwortmeldung angezeigt wird, beinhaltet mindestens eine gemeinsame Menuoption und könnte zum Beispiel wie folgt visuell aussehen:
Postdienstmenu für 0794444333
   Se haben eine Sprachmeldung von 079444351 um 08:15
   erhalten, und eine Fax Meldung von 014445555 um 08:32 erhalten.
Optionen:
   1. Begrüssungsmenu
   2. Dienste aktivieren / ausschalten
   3. Zugang einstellen

Der Teilnehmer drückt die Taste, die der gewünschten Option entspricht, oder spricht seine Wahl, falls das IVR 50 die Spracherkennung unterstützt. Je nach Mobilendgerät und nach eingegebene Sequenz wird nun ein DTMF-Ton oder ein USSD Datagramm ausgelöst (Schritt 6). Das IVR 50 oder dasDatagramm-Bearbeitungsmodul 51 nimmt in jedem Fall die Auswahl wahr und leitet sie an den Gesprächsmanager 52, der die gewünschte Aktion ausführt. Die Aktion kann beispielsweise das Sprechen und/oder das Anzeigen von einem neuen Menu auslösen, das Abhören oder Löschen von hinterlassenen Meldungen, oder die direkte Verbindung durch die Vermittlungsstelle 53 mit einer Drittpartei.

Statt mit USSD können die Datagramms 40, 6, 41 auch mit SMS, zum Beispiel mit Flash-SMS, zwischen dem Teilnehmer 1 und dem Dienstserver 5 ausgetauscht werden. USSD haben jedoch den Vorteil einer schnellen und billigen Übertragung, während SMSbesser verbreitet und unterstützt sind.

In einem zweiten Beispiel dient der Dienstserver 5 als Sprachportal, Sprach-Info- oder -Auskunftdienst. Anrufende Teilnehmer können über Menus, die gleichzeitig gesprochen und angezeigt werden, im Dienst navigieren, um die gewünschte Information zu erhalten. Der Dienstserver kann auch als Unterstützung von Call-Center verwendet werden, um anrufende Teilnehmer schneller und mit weniger menschlichen Unterstützung an den richtigen Gesprächspartner zu verbinden.

In einem dritten Beispiel dient der Dienstserver 5 als Vermittlungsstelle, über welche Teilnehmer 1 gewünschte Gesprächspartner bequemer anrufen können. Teilnehmer 1 können somit gewünschte Gesprächspartner entweder direkt anrufen - beispielsweise indem sie die Sequenz 0794444333[OK] auf der Tastatur des Mobilendgeräts 10 eingeben, mit dem Ergebnis, dass der gewünschte Partner vielleicht besetzt ist oder nicht erreichbar oder nicht gestört werden möchte, oder auch mittels Datagramm, beispielsweise USSD oder SMS, beispielsweise mit der Sequenz
*137*0794444333#
in welcher 137 die USSD-Dienstnummer ist und 0794444333 die Nummer des gewünschten Teilnehmers,

Dieses Datagramm 41 wird an den Dienstserver 5 über einen nicht dargestellten USSD-Händler geleitet. Der Dienstserver versucht dann die Verbindung zwischen dem anrufenden Teilnehmer 1 und dem gewünschten Teilnehmer über die Vermittlungsstelle 53 direkt aufzubauen. Falls dies nicht erfolgt, baut der Dienstserver 5 eine Sprachverbindung 32 als Callback-Anruf mit dem Teilnehmer 1 auf, und spricht ein Menu. Fast gleichzeitig wird auch ein Text-Menu in einem Datagramm 40 (zum Beispiel eine SMS oder eine USSD) verpackt, an den Teilnehmer 1 gesendet und auf der Anzeige 100 wiedergegeben. Das Menu enthält Informationen über den Status des Angerufenen, und Optionen mit welchen er entscheiden kann, wie er mit dem Gesprächsaufbau weiter verfahren möchte.

Wenn der Teilnehmer 0794444333 besetzt ist, könnte beispielsweise folgendes Menu visuell und gleichzeitig gesprochen wiedergegeben werden:
Teilnehmer 0794444333 ist momentan besetzt.
Optionen:
   1. Warten bis frei
   2. Nachricht im Postdienstsystem hinterlassen
   3.Trotzdem durchschalten
   4.Textmeldung schicken
   5. Um Rückruf bitten.

Nachdem die Verbindung mit einem Callback aufgebaut ist, verschwindet das angezeigte Menu.

In einem vierten Beispiel dient der Dienstserver 5 als netzbasierter Sprachassistent in der Vermittlungsstelle für besetzte Mobilteilnehmer 1. Mit diesem Assistent wird ein Mobilteilnehmer informiert, wenn er während einer bestehenden Sprachverbindung von einem anderen Gesprächspartner angerufen wird. In diesem Fall initiiert der Dienstserver 5 die Sendung eines Datagramms (zum Beispiel eine SMS oder eine USSD) an den besetzten angerufenen Mobilteilnehmer. Das Datagramm enthält ein Menu, das auf der Anzeige 100 wiedergegeben wird. Das Menu enthält eine Liste von auswählbaren Optionen, zum Beispiel:
Sie erhalten einen Anruf vom Teilnehmer 0794444333.
Optionen:
   1. Bitten um späteren Anruf.
   2. Warten lassen.
   3. Sofort beantworten.
   4. Mit dem Sprachbeantworter verbinden.
   5. Telefonische Konferenz zwischen allen Parteien.

Der Teilnehmer drückt die Taste, die der gewünschten Option entspricht, oder sendet ein USSD oder eine SMS an den Dienstserver. Wenn die Option 1 ausgewählt wird, beantwortet der Dienstserver den ankommenden Anruf selbst mit einer Sprachmeldung, zum Beispiel: "Der gewünschte Mobilteilnehmer ist momentan besetzt, bitte rufen Sie später an". Wird die Option 2 ausgewählt, bleibt einfach der neue Anruf im Stand-by, solange der Mobilteilnehmer 1 besetzt ist. Mit der Option 3 kann der Mobilteilnehmer sofort die Verbindung schalten lassen, die bestehende Verbindung in Stand-by setzen und den neuen Anruf beantworten. Die Option 4 verbindet den Anrufer mit einem Sprachbeantworter, zum Beispiel mit einem netzbasierten Sprachbeantworter. Ausserdem kann durch Auswahl der Option 5 eine telefonische Konferenz zwischen allen Parteien, dasheisst zwischen dem angerufenen Mobilteilnehmer 1, seinem ersten Gesprächspartner und dem neuen Anrufer veranlasst werden.

Statt mit einer USSD könnte der Teilnehmer 1 auch in diesem Beispiel die Verbindung mit dem Dienstserver 5 auch mit dem Aufbau einer üblichen Sprachverbindung aufnehmen. In diesem Fall müsste der Teilnehmer 1 vorerst die Dienstnummer desDienstservers 5 anwählen, und dann die Nummer des gewünschten Teilnehmers.

Der Fachmann wird verstehen, dass statt Textmenus auch graphische Menuswiedergegeben werden können, wenn die Datagramms und die Anzeige 100 es erlauben. Somit können Menus auch über MMS oder EMS-Meldungen übertragen werden. Menus können auch via zusätzliche auf dem Gerät installierte Software, zum Beispiel Java-Programme, grafisch aufbereitet und angezeigt werden.

## Patentansprüche

1. Verfahren, mit welchem ein Dienstserver (5) ein Menu visuell auf der Anzeige (100) eines Mobilendgeräts(10) eines Mobilteilnehmers(1) wiedergeben lassen kann,
wobei das Menu eine Vielzahl von Menuoptionen beinhaltet,
wobei mindestens gewisse Menuoptionen vom Dienstserver (5) dem benannten Mobilteilnehmer während einer Sprachverbindung gesprochen werden,
und wobei das benannte Menu während der benannten Sprachverbindung wiedergegeben wird,
**dadurch gekennzeichnet, dass** das benannte Menu über ein Datagramm, das vom benannten Dienstserver vorbereitet wird, an den benannten Mobilteilnehmer gesendet wird,
und wobei das benannte Datagramm über einen separaten, nicht geschalteten Datenübertragungskanal, übertragen wird.

2. Verfahren gemäss Anspruch 1, in welchem die vom Mobilteilnehmer gewählte Option über ein Datagramm, das vom benannten Mobilteilnehmer während der Sprachverbindung vorbereitet wird, an den benannten Dienstserver (5) gesendet wird.

3. Verfahren gemäss einem der Ansprüche 1 bis 2, in welchem das benannte Datagramm eine SMS-Meldung ist.

4. Verfahren gemäss einem der Ansprüche 1 bis 2, in welchem das benannte Datagramm eine synchrone oder quasi-synchrone Meldung ist.

5. Verfahren gemäss Anspruch 4, in welchem das benannte Mobilendgerät ein Mobilfunktelefon ist, in welchem das benannte Datagramm eine USSD ist, und in welchem die benannten Menuoptionen als USSD-Menu angezeigt werden.

6. Verfahren gemäss einem der Ansprüche 1 bis 5, in welchem mindestensgewisse Menuoptionen entweder über Sprachbefehle oder über die benannten Datagramme gewählt werden können.

7. Verfahren gemäss einem der Ansprüche 1 bis 6, in welchem mindestens gewisse Menuoptionen entweder über DTMF-Befehle oder über die benannten Datagramme gewählt werden können.

8. Verfahren gemäss einem der Ansprüche 1 bis 7, in welchem der Text, der durch den benannten Server gesprochen wird, vom benannten gesendeten Datagramm abhängig ist.

9. Verfahren gemäss einem der Ansprüche 1 bis 8, in welchem das benannte Menu, das abgebildet wird, von früher eingegebenen Sprachbefehlen und/oder von früher gesendeten DTM F-Befehlen abhängig ist.

10. Verfahren gemäss einem der Ansprüche 1 bis 9, in welchem das benannte abgebildete Menu verschwindet, ohne dass die Sprachverbindung dabei unterbrochen wird, wenn gewisse Optionen gewählt werden.

11. Verfahren gemäss einem der Ansprüche 1 bis 10, mit folgenden Schritten:
der benannte Mobilteilnehmer (1) wählt die Nummer des Dienstservers (5) mit seinem benannten Mobilendgerät (30),
eine Sprachverbindung wird zwischen dem benannten Mobilteilnehmer und dem benannten Dienstserver aufgebaut,
Menuoptionen werden gesprochen und auf der benannten Anzeige angezeigt (41; 40),
der Mobilteilnehmer wählt die benannte gewählte Option und leitet sie an den benannten Dienstserver über ein synchrones oder quasi-synchrones Datagramm (6).

12. Verfahren gemäss einem der Ansprüche 1 bis 11, mit folgenden Schritten:
der benannte Mobilteilnehmer (1) sendet ein Datagramm (41) an den benannten Dienstserver (5),
eine Sprachverbindung wird zwischen dem benannten Mobilteilnehmer (1) und dem benannten Dienstserver (5) aufgebaut (32),
Menuoptionen werden auf der benannten Anzeige (100) angezeigt und gesprochen (40; 31),
der Mobilteilnehmer (1) wählt die benannte gewählte Option und leitet sie an den benannten Dienstserver über ein synchrones oder quasi-synchrones Datagramm (6).

13. Verfahren gemäss einem der Ansprüche 1 bis 12, in welchem der benannte Dienstserver (6) ein Netzwerk-basiertes Postdienstsystem steuert, in welchem Anrufer Sprachmeldungen für die benannten Mobilteilnehmer hinterlassen, und in welchem die benannten Mobilteilnehmer durch Eingabe einer benannten Option in einem Datagramm Sprachmeldungen abhören und/oder löschen können.

14. Verfahren gemäss einem der Ansprüche 1 bis 13, in welchem der benannte Dienstserver (5) es erlaubt, eine Sprachverbindung mit anderen Mobilteilnehmern aufzubauen.

15. Verfahren gemäss Anspruch 14, in welchem ein benanntes Menu dem anrufenden Mobilteilnehmer (1) erlaubt, zwischen mehreren gewünschten Mobilteilnehmern zu wählen.

16. Verfahren gemäss einem der Ansprüche 14 bis 15, in welchem ein benanntes Menu dem anrufenden Mobilteilnehmer zu entscheiden erlaubt, wie er mit dem Gesprächsaufbau weiter verfahren möchte, wenn der gewünschte Mobilteilnehmer (1) unerreichbar ist.

17. Dienstserver (5) mit folgenden Merkmalen:
ein Sprachmodul (50), um ein Sprachmenu, daseine Vielzahl von Optionen anbietet, anrufende Mobilteilnehmer (1) zu sprechen,
ein Datagramm-Bearbeitungsmodul (51), um Datagramms über einen nicht geschalteten Datenübertragungskanal (4) zu senden,
ein Gespräch-Manager (52), um die benannten Moduls zu steuern,
**dadurch gekennzeichnet, dass** der benannte Gespräch-Manager derart gestaltet ist, dass er mindestensgewisse Menuoptionen während einer Sprachverbindung vom Sprachmodul (50) sprechen lässt und vom Datagramm-Bearbeitungsmodul (51) als in einem Datagramm verpackten Menu senden lässt.
